(19)

Europäisches Patentamt
European Patent Office
Office européen des brevets

(11) **EP 2 071 212 A1**

(12) **EUROPEAN PATENT APPLICATION**

(43) Date of publication:
**17.06.2009 Bulletin 2009/25**

(51) Int Cl.:
*F16H 3/66* $^{(2006.01)}$

(21) Application number: **07024181.5**

(22) Date of filing: **13.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **GM Global Technology Operations, Inc.**
**Detroit, MI 48265-3000 (US)**

(72) Inventor: **Rihn, Matthieu**
**67380 Lingolsheim (DE)**

(74) Representative: **Strauss, Peter**
**Adam Opel GmbH**
**Patentrecht, A0-02**
**65423 Rüsselsheim (DE)**

(54) **Ravigneaux gearset for an automatic transmission**

(57)     The invention concerns a Ravigneux gearset for automatic transmissions.

In order to provide a Ravigneaux gearset for which $\lambda_1 < 0$, $\lambda_2 < 0$, and $K < 0$ and with better efficiency and more clearance between the gears, a Ravigneaux gearset is proposed in which P1 transmits the power from S1 to R1 and P2 transmits the power from S2 to R2, LP1 meshing with P1 and LP2 meshing with R2.

An alternative embodiment of the invention is a Ravigneaux gearset in which P1 transmits the power from S1 to R1 and LP2 transmits the power from S2 to R2 and wherein LP1 is meshing with P1.

The use of the configurations according to the invention expand the possibilities of ratios given by Ravigneaux gearsets and make it possible to find new concepts for automatic transmissions.

Figure 3

EP 2 071 212 A1

**Description**

The invention concerns a Ravigneux gearset for automatic transmissions.

Ravigneaux gearsets are well known in the field of automatic transmissions. A Ravigneaux gearset is a two-deck planetary gearset with a common planet pinion carrier and a plurality of long pinions, simultaneously meshing with some gears of the front deck and some gears of the rear deck.

Such a Ravigneaux gearset is described for example in GB 2 411 443 A. A planet pinion carrier supports via shafts short pinions and long pinions, each of the short pinions being located between two long pinions and meshing with the two long pinions.

The document JP 09032892 A concerns a stepped Ravigneaux-type planetary gear mechanism. In order to more freely select a gear ratio by changing a conventional long pinion gear to a stepped long gear and combining a front sun gear with a rear sun gear, this document proposes a stepped long pinion comprising a long front gear and a long rear gear which are disposed at 120° intervals around a front sun gear and a rear sun gear and are engaged with them, respectively, wherein the front sun gear and the rear sun gear are coaxially disposed, and the number of the long front gear is different from that of the long rear gear and the lead of these gears are the same.

In fact, the ratios that can be obtained by the use of a Ravigneaux gearset are fully determined by the values of the three following factors which depend on the tooth counts of the gears and on the arrangement of the gears in the Ravigneaux gearset:

$$K = (\omega_{S1} - \omega_{carrier}) / (\omega_{S2} - \omega_{carrier})$$

$$\lambda_1 = (\omega_{S1} - \omega_{carrier}) / (\omega_{S2} - \omega_{carrier})$$

$$\lambda_2 = (\omega_{S2} - \omega_{carrier}) / (\omega_{R2} - \omega_{carrier})$$

where $\omega_i$ is the rotating speed of the element i.

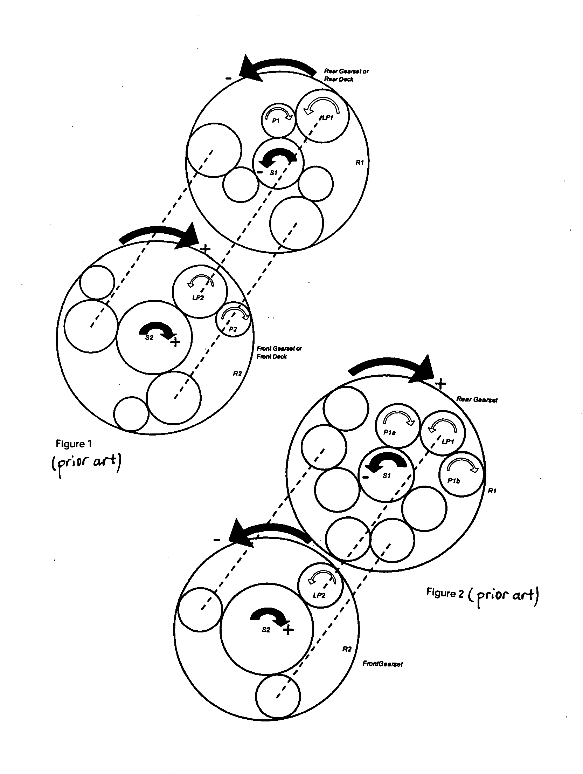

The meaning of these three factors is clearly understandable on FIGURE 1 (prior art) representing a Ravigneaux gearset with two sun gears (S1, S2), two ring gears or internal gears (R1, R2), two sets of short pinions (P1, P2) and a set of long pinions, the front gear of which is called LP2 and the rear gear of which is called LP1.

For someone looking at things from the perspective of the planet pinion carrier (that is to say when the carrier is stationary), $\lambda 1$ (respectively $\lambda 2$) gives the speed ratio of S1 vs. R1 (respectively S2 vs. R2). These ratios can be positive or negative, indicating that R1 and S1 are rotating in the same direction, or in the opposite direction. Similarly, K gives the speed ratio of S2 vs. S1.

For the peculiar example of FIGURE 1, there is:

$\lambda_1 > 0$,

$\lambda_2 > 0$, and

$K < 0$.

LP1 (respectively LP2) is located in the power path from S1 to R1 (respectively S2 to R2).

However, for some concepts in automatic transmissions, and especially concepts of 8-speed automatic transmissions, it would be desirable to have:

$\lambda_1 < 0$,

$\lambda_2 < 0$, and

$K < 0$.

A possible solution in order to obtain a Ravigneaux gearset with these values is shown in FIGURE 2 (prior art). This is the classical way of designing a Ravigneaux gearset with LP1 (respectively LP2) transmitting the power from S1 to R1 (respectively from S2 to R2).

As can be seen in FIGURE 2 (prior art), the number of planet pinions is increased which decreases the efficiency (more meshings, thus more losses) and which renders it more difficult to keep enough clearance between the gears, especially in order to leave enough space for the carrier.

It is the object of the invention to provide a Ravigneaux gearset for which $\lambda_1 < 0$, $\lambda_2 < 0$, and K < 0 and with better efficiency and more clearance between the gears.

This object is achieved according to the invention by a Ravigneaux gearset in which a planet gear of a first deck transmits the power from a sun gear of the first deck to a ring gear of the first deck and a planet gear of a second deck transmits the power from a sun gear of the second deck to a ring gear of the second deck, a long pinion of the first deck meshing with the planet gear of the first deck and a long pinion of the second deck meshing with the ring gear of the second deck.

The idea of the Ravigneaux gearsets of the present invention was to create a configuration in which LP1 or LP2 would not be in the power path between S1 and R1, respectively S2 and R2.

An alternative embodiment of the invention is a Ravigneaux gearset in which a planet gear of a first deck transmits the power from a sun gear of the first deck to a ring gear of the first deck and a long pinion of the second deck transmits the power from a sun gear of the second deck to a ring gear of the second deck and wherein a long pinion of the first deck is meshing with the planet gear of the first deck..

Each of the two alternative configurations can be preferably used depending on the desired values of $\lambda_1$, $\lambda_2$ and K. It is also possible to inverse the front gearset and the rear gearset depending on the desired values of $\lambda_1$, $\lambda_2$ and K. Of course, the configurations are susceptible to be used as if they were seen in a mirror.

The use of the configurations according to the invention expand the possibilities of ratios given by Ravigneaux gearsets and make it possible to find new concepts for automatic transmissions.

In the following, the invention will be explained in detail with reference to the drawings in which

FIGURE 1 shows a classical prior art Ravigneaux gearset,

FIGURE 2 shows a prior art Ravigneaux gearset with $\lambda_1 < 0$, $\lambda_2 < 0$, and K < 0,

FIGURE 3 shows a first Ravigneaux gearset according to the invention,

FIGURE 4 shows a second Ravigneaux gearset according to the invention, and

FIGURE 5 shows the first Ravigneaux gearset according to the invention and its mirror configuration.

FIGURE 1 (prior art) shows a classical configuration of a Ravigneaux gearset.

FIGURE 2 (prior art) shows a classical configuration of a Ravigneaux gearset with $\lambda_1 < 0$, $\lambda_2 < 0$, and K < 0.

In these classical configurations, LP1 transmits the power from S1 to R1 and LP2 from S2 to R2.

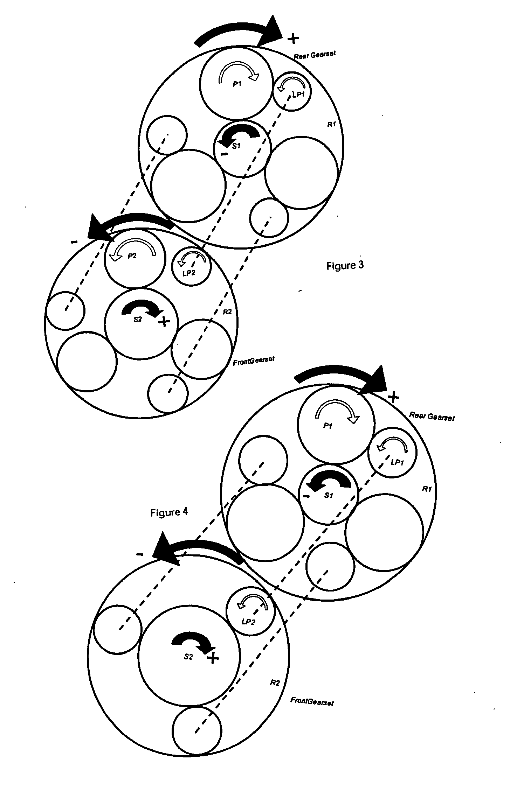

FIGURE 3 shows a first Ravigneaux gearset of the present invention. It differs from the classical configuration in that the long pinion LP1 of the first deck is not in the power path between the sun gear S1 and the ring gear R1 of this deck and in that the long pinion LP2 of the second deck is not in the power path between the sun gear S2 and the ring gear R2 of the second deck. Concretely, the planet gear P1 of the first deck transmits the power from the sun gear S1 to the ring gear R1 in the rear gearset and the planet gear P2 transmits the power from the sun gear S2 to the ring gear R2 in the front gearset. The long pinion LP1 of the first deck meshes only with the planet gear P1 and the long pinion LP2 of the second deck meshes only with the ring gear R2 of this deck. In each gearset, there are three planet gears meshing with the sun gear S1 and the ring gear R1 and, respectively with the sun gear S2 and the ring gear R2, as well as three long pinions LP1, respectively LP2.

In the second Ravigneaux gearset according to the present invention which is shown in FIGURE 4, the planet gears and the long pinions are also present in triplicate, but in this configuration, the planet gear P1 of the first deck transmits the power from the sun gear S1 to the ring gear R1 of this deck and the long pinion LP2 of the second deck transmits the power from the sun gear S2 to the ring gear R2 of the second deck. The long pinion LP1 of the first deck meshes only with the planet gear P1 of this deck. In this second gearset, there are no short planet gears in the front gearset.

As can be seen in FIGURES 3 and 4, the front and the rear gearsets turn inversely. A person skilled in the art will choose between the first and the second configuration of the invention according to the required values of $\lambda_1$, $\lambda_2$, and K. Depending on these values, the front gearset and the rear gearset may also be inversed.

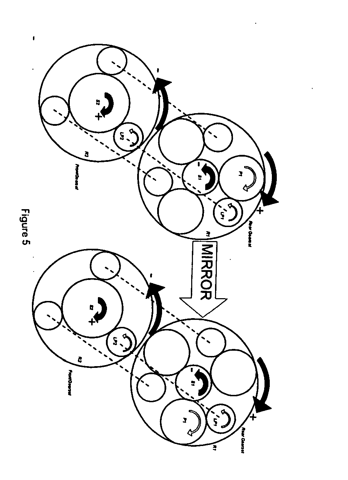

FIGURE 5 shows that for each gearset, the configurations can also be used as if they were seen in a mirror: For example, in the first configuration of the invention, the long pinion LP1 of the first deck may mesh with the planet gear P1 of this deck as well on the left as on the right side of the planet gear P1.

**Claims**

1. Ravigneaux gearset for automatic transmissions, **characterized in that** a planet gear (P1) of a first deck transmits the power from a sun gear (S1) of the first deck to a ring gear (R1) of the first deck and a planet gear (P2) of a second deck transmits the power from a sun gear (S2) of the second deck to a ring gear (R2) of the second deck, a long pinion (LP1) of the first deck meshing with the planet gear (P1) of the first deck and a long pinion (LP2) of the second deck meshing with the ring gear (R2) of the second deck.

2. Ravigneaux gearset for automatic transmissions, **characterized in that** a planet gear (P1) of a first deck transmits the power from a sun gear (S1) of the first deck to a ring gear (R1) of the first deck and a long pinion (LP2) of the second deck transmits the power from a sun gear (S2) of the second deck to a ring gear (R2) of the second deck and wherein a long pinion (LP1) of the first deck is meshing with the planet gear (P1) of the first deck.

3. Ravigneaux gearset according to claim 1 or to claim 2, **characterized in that** the front and the rear gearsets are inversed.

Figure 1
(prior art)

Figure 2 (prior art)

Figure 3

Figure 4

Figure 5

**European Patent Office**

**EUROPEAN SEARCH REPORT**

Application Number

EP 07 02 4181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/102082 A1 (JOE SHINICHIRO [JP] ET AL) 12 May 2005 (2005-05-12) * paragraphs [0196] - [0200]; figure 13 * ----- | 1-3 | INV. F16H3/66 |
| X | US 5 135 444 A (HATTORI NOBORU [JP]) 4 August 1992 (1992-08-04) * column 7, line 61 - column 8; figures 7,9 * ----- | 1-3 | |
| X | US 2 220 174 A (POL RAVIGNEAUX) 5 November 1940 (1940-11-05) * column 2, lines 49-67; figure 4 * ----- | 2,3 | |
| A | US 4 077 282 A (KRESS JAMES HENRY) 7 March 1978 (1978-03-07) * the whole document * ----- | 1-3 | |
| | | | TECHNICAL FIELDS SEARCHED (IPC) |
| | | | F16H |

The present search report has been drawn up for all claims

| Place of search | Date of completion of the search | Examiner |
|---|---|---|
| Munich | 11 March 2008 | Lord, Gareth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 02 4181

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2008

| Patent document cited in search report | | Publication date | Patent family member(s) | | Publication date |
|---|---|---|---|---|---|
| US 2005102082 | A1 | 12-05-2005 | JP<br>JP | 3991975 B2<br>2005145150 A | 17-10-2007<br>09-06-2005 |
| US 5135444 | A | 04-08-1992 | NONE | | |
| US 2220174 | A | 05-11-1940 | NONE | | |
| US 4077282 | A | 07-03-1978 | AR<br>AU<br>AU<br>CA<br>DE<br>ES<br>FR<br>GB<br>IT<br>JP<br>MX | 220694 A1<br>504988 B2<br>2756877 A<br>1069732 A1<br>2756144 A1<br>465323 A1<br>2375505 A1<br>1594847 A<br>1090960 B<br>53079154 A<br>143116 A | 28-11-1980<br>01-11-1979<br>08-02-1979<br>15-01-1980<br>29-06-1978<br>16-09-1978<br>21-07-1978<br>05-08-1981<br>26-06-1985<br>13-07-1978<br>18-03-1981 |

EPO FORM P0459

For more details about this annex : see Official Journal of the European Patent Office, No. 12/82

## REFERENCES CITED IN THE DESCRIPTION

**Patent documents cited in the description**

- GB 2411443 A

- JP 09032892 A